# EUROPÄISCHE PATENTSCHRIFT

(11) **EP 2 305 898 B1**
(45) Veröffentlichungstag und Bekanntmachung des Hinweises auf die Patenterteilung: **26.07.2017**
(21) Anmeldenummer: 10177067.5
(22) Anmeldetag: 16.09.2010
(51) Int. Cl.: E03C 1/322, E03D 11/14, F16B 37/08, F16B 39/12

(54) **Befestigungsvorrichtung für einen Sanitärgegenstand und Verfahren zur Befestigung eines Sanitärgegenstands**
Fastening device for a sanitary object and method for fastening a sanitary object
Dispositif et procédé de fixation pour un objet d'équipement sanitaire

(30) Priorität: 18.09.2009 EP 09011930
(43) Veröffentlichungstag der Anmeldung: 06.04.2011
(73) Patentinhaber: KERAMAG Service GmbH & Co. KG, 88630 Pfullendorf (DE)
(72) Erfinder: Brohammer, Bernd, 40476 Düsseldorf (DE)
(74) Vertreter: Gulde & Partner

(56) Entgegenhaltungen:
- EP-A1- 0 670 394
- EP-A1- 1 666 342
- EP-A2- 1 170 427
- DE-T2- 68 903 541
- DE-U1- 9 114 083

## Beschreibung

Die Erfindung betrifft eine Vorrichtung und ein Verfahren zur Befestigung von Sanitärausstattungsgegenständen, insbesondere für Waschbecken, Waschtische, Bidets, Klosetts, Urinale, Spülkästen, WC's in Kombination mit Spülkästen und dergleichen.

Derartige Sanitärausstattungsgegenstände werden üblicherweise über Wandschrauben an einer Wand aufgehängt bzw. an dieser befestigt. Bei der Montage dieser Sanitärausstattungsgegenstände werden diese üblicherweise auf die Wandschrauben aufgeschoben, wobei die Sanitärausstattungsgegenstände erst dann an der Wand gesichert sind, wenn eine entsprechende Mutter auf die Wandschrauben aufgeschraubt wird. Somit ist insbesondere die Montage für eine einzelne Person problematisch.

Ferner ist es zeitaufwendig, die Mutter über das gesamte Gewinde auf die Wandschraube aufzuschrauben, da die Wandschrauben für verschiedenste Sanitärausstattungsgegenstände verhältnismäßig lang sind und daher das Aufschrauben langwierig und umständlich ist. Wird dabei die Montage von einer einzelnen Person durchgeführt wird, dann besteht insbesondere die Gefahr, dass der Sanitärausstattungsgegenstand vor seiner Sicherung durch das Aufsetzen der Mutter von der Wandschraube abrutscht.

Aus der DE 9 114 083 U1 ist dazu eine einfache Montagesicherung in Form einer angepassten Bundhülse bekannt, welche vor einer Fixierung durch die Mutter auf die Wandschraube aufgesteckt werden kann und anschließend durch eine integrierte Abzugsicherung eine versehentliches Abrutschen des Sanitärausstattungsgegenstand verhindern sollen. Die Montage erfordert jedoch auch weiterhin das gleichzeitige Halten des Sanitärausstattungsgegenstandes beim Aufsetzen der Montagesicherung. Anschließend kann eine normale Fixierung durch Muttern erfolgen.

Aus der EP 0 353 066 B1 ist eine Befestigungsvorrichtung nach dem Oberbegriff von Anspruch 1 bekannt. Dieses Dokument stellt somit den der Erfindung nächstkommenden Stand der Technik dar. Der dort gezeigte Stoßbefestiger kann nach dem Aufschieben eines Sanitärausstattungsgegenstandes auf eine Wandschraube ebenfalls durch Aufdrücken in Wirkverbindung gebracht werden. Zwar ist in diesem Fall kein weiteres langwieriges Aufschrauben einer Mutter notwendig, die Gefahr des Abrutschens des Sanitärausstattungsgegenstands von den Wandschrauben besteht jedoch ebenfalls.

Weitere Ofptionen zur vereinfachten Montage von Sanitärausstattungsgegenständen sind auch in der EP 1 666 342 A1, der EP 1 170 427 A2 und der EP 0 670 394 A1 zu finden. Dort werden verschiedene selbstspannende Zugvorrichtungen offenbart, die jedoch ebenfalls nach dem ersten Ausrichten des Sanitärausstattungsgegenstandes an der Wand eine manuelle Fixierung oder zumindest Sicherung erfordern.

Daher ist es Aufgabe der vorliegenden Erfindung, eine Vorrichtung und ein Verfahren zur Befestigung von Sanitärausstattungsgegenständen bereitzustellen, wodurch die Montage der Sanitärausstattungsgegenstände an der Wand vereinfacht wird und diese vorzugsweise besonders schnell und effizient befestigt werden können.

Diese Aufgabe wird durch eine Vorrichtung mit den Merkmalen von Anspruch 1 sowie ein Verfahren mit den Merkmalen von Anspruch 7 gelöst.

Der Erfindung liegt der Gedanke zugrunde, dass durch die erfindungsgemäße Vorrichtung und das erfindungsgemäße Verfahren der Sanitärausstattungsgegenstand bereits nach dem Aufschieben auf die Wandschrauben mit jeweils vormontierten Hülsenteilen vorläufig durch jeweils ein mit den Hülsenteilen zusammenwirkendem Arretierungsteil gesichert wird, welches lediglich für die Endmontage mittels eines handelsüblichen Montageschlüssels durch wenige Umdrehungen endgültig an der Wand befestigt wird.

Die erfindungsgemäße Befestigungsvorrichtung für einen Sanitärausstattungsgegenstand weist zumindest ein am Sanitärausstattungsgegenstand vormontierbares Hülsenteil, welches in eine Befestigungsöffnung des Sanitärausstattungsgegenstands einsetzbar ist und welches bei der Anbringung des Sanitärausstattungsgegenstands an einer Wand im am Sanitärausstattungsgegenstand vormontierten Zustand mit dem Gewinde einer aus der Wand hervorstehenden Wandschraube in Eingriff durch Aufschieben bringbar ist, und zumindest ein Arretierungsteil auf, welches derart mit dem Hülsenteil zusammenwirkt, dass der Sanitärausstattungsgegenstand durch eine Druckkraft, die zu einer auf die Wandschraube wirkenden Zugkraft das Kräftegleichgewicht herstellt, an der Wand befestigt wird, wobei das Arretierungsteil die Zugkraft auf das Hülsenteil ausübt, wobei das Hülsenteil bei der Montage diese Zugkraft auf die Wandschraube überträgt und wobei das Arretierungsteil bei der Montage zur Herstellung des Kräftegleichgewichtes die Druckkraft auf den Sanitärausstattungsgegenstand ausübt. Das Hülsenteil weist einen Kragen auf, welcher im vormontierten Zustand an der der Wand zugewandten Seite des Sanitärausstattungsgegenstands derart vorgesehen ist, dass der Sanitärausstattungsgegenstand zusammen mit dem Hülsenteil auf die Wandschraube aufschiebbar ist. Der Kragen ermöglicht dabei eine formschlüssige Übertragung der Druckkraft des Arretierungsteils auf den Sanitärausstattungsgegenstand in besonders einfacher Art und Weise.

Dadurch, dass das Hülsenteil zusammen mit dem Arretierungsteil am Sanitärausstattungsgegenstand vormontiert wird und anschließend daran an der Wandschraube nach dem Aufschieben durch das Hülsenteil gesichert ist, ist es lediglich erforderlich, dass das Arretierungsteil mit wenigen Umdrehungen eine Zugkraft auf das Hülsenteil ausübt und dadurch der Sanitärausstattungsgegenstand an der Wand endgültig montiert wird. Somit ist es durch das Aufschieben des Sanitärausstattungsgegenstands, welcher mit dem Hülsenteil und dem Arretierungsteil vorinstalliert ist, auf die Wandschraube möglich, dass die Montage von einer einzelnen Person durchgeführt wird, ohne dass die Gefahr des Abrutschens des Sanitärausstattungsgegenstands von den Wandschrauben besteht. Des Weiteren ist die Montage des Sanitärausstattungsgegenstands besonders schnell und effizient, da nach dem Aufschieben des Sanitärausstattungsgegenstands nur noch wenige Umdrehungen, insbesondere maximal drei Umdrehungen des Arretierungsteils erforderlich sind, um den Sanitärausstattungsgegenstand endgültig an der Wand zu befestigen. Ein langwieriges Aufschrauben einer Mutter auf die Wandschraube zur Endmontage des Sanitärausstattungsgegenstands entfällt somit in besonders vorteilhafter Art und Weise.

Darüber hinaus ist eine einfache Demontage des Sanitärausstattungsgegenstands möglich, wobei lediglich das Arretierungsteil von dem Hülsenteil gelöst werden muss und anschließend daran der Sanitärausstattungsgegenstand von den Wandschrauben abgezogen werden kann, wobei jedoch das Hülsenteil an den Wandschrauben verbleibt und ggf. für eine erneute neue Montage genutzt werden kann.

Weitere vorteilhafte Ausgestaltungen ergeben sich aus den Unteransprüchen, So ist es insbesondere von Vorteil, wenn das vormontierbare Hülsenteil an seinem Innendurchmesser Vorsprünge aufweist, welche die Zugkraft bei der Montage auf die Wandschraube übertragen, wobei die Vorsprünge bereits ohne Ausübung der Zugkraft durch das Arretierungsteil derart mit der Wandschraube zusammenwirken, dass der Sanitärausstattungsgegenstand an der Wandschraube fixiert bzw. gesichert ist.

Ein weiterer Vorteil der Erfindung liegt darin, dass der Kragen in axialer Richtung des Hülsenteils eine derartige Flexibilität aufweist, dass der Kragen bei der Montage durch die von der Drehbewegung des Arretierungsteils bewirkten Zugkraft im Hülsenteil in Richtung der Wand verformt wird. Somit kann der Sanitärausstattungsgegenstand in flexibler und sicherer Art und Weise an der Wand endgültig befestigt werden.

Wenn das Hülsenteil an dem dem Kragen entgegengesetzten Ende ein Außengewinde aufweist, welches mit einem Innengewinde des Arretierungsteils zur Aufbringung der Zugkraft in Eingriff bringbar ist, so kann die Zugkraft in besonders effektiver Art und Weise von dem Arretierungsteil auf das Hülsenteil ausgeübt werden, um den Sanitärausstattungsgegenstand an der Wand zu befestigen.

Gemäß einer weiteren bevorzugten Ausführungsform weist das Arretierungsteil eine Aufnahme für einen handelsüblichen Montageschlüssel auf, insbesondere einen metrischen Kopf, um den Sanitärausstattungsgegenstand in einfacher und effektiver Art und Weise an der Wand zu montieren.

Das erfindungsgemäße Verfahren zur Befestigung von Sanitärausstattungsgegenständen weist folgende Schritte auf:
Vorinstallation eines Hülsenteils in eine Befestigungsöffnung des Sanitärausstattungsgegenstands vor dem Anbringen des Sanitärausstattungsgegenstands an einer Wand, wobei ein Arretierungsteil an dem Hülsenteil angebracht wird,
Aufschieben des Sanitärausstattungsgegenstands zusammen mit dem vormontierten Hülsenteil auf eine Wandschraube bis zur Anlage des Sanitärausstattungsgegenstands an der Wand,
Befestigen des Sanitärausstattungsgegenstands an der Wand durch Aufbringung einer Zugkraft durch ein Arretierungsteil, welches derart mit dem Hülsenteil zusammenwirkt, dass der Sanitärausstattungsgegenstand durch eine Druckkraft, die das Kräftegleichgewicht zu einer auf die Wandschraube wirkenden Zugkraft herstellt, an der Wand befestigt wird, wobei die Zugkraft durch das Arretierungsteil auf das Hülsenteil ausgeübt wird, wobei diese Zugkraft durch das Hülsenteil bei der Wandmontage auf die Wandschraube übertragen wird und wobei die zur Herstellung des Kräftegleichgewichtes aufgebrachte Druckkraft auf den Sanitärausstattungsgegenstand durch das Arretierungsteil bei der Montage ausgeübt wird.

Gemäß dem erfindungsgemäßen Verfahren kann somit ein Sanitärausstattungsgegenstand in besonders schneller und effektiver Art und Weise an der Wand montiert werden, wobei das am Sanitärausstattungsgegenstand vormontierte Hülsenteil zusammen mit dem Arretierungsteil ein Aufschieben dieser vorinstallierten Elemente auf die Wandschrauben ermöglicht und dadurch der Sanitärausstattungsgegenstand nach dem Aufschieben auf die Wandschrauben vorläufig an dieser gesichert ist und lediglich durch maximal drei Umdrehungen des Arretierungsteils endgültig an der Wand montiert werden kann.

Insbesondere kann der Sanitärausstattungsgegenstand zusammen mit dem Hülsenteil und dem Arretierungsteil bereits beim Hersteller vormontiert werden, so dass bei der Montage vor Ort lediglich der derart vormontierte Sanitärausstattungsgegenstand auf die Wandschrauben aufgeschoben wird und die Zugkraft durch das Arretierungsteil mittels weniger Umdrehungen auf die Wandschrauben aufgebracht wird, so dass der Sanitärausstattungsgegenstand endgültig an der Wand befestigt ist.

Des Weiteren ist es von Vorteil, wenn am Innendurchmesser des vormontierbaren Hülsenteils Vorsprünge vorgesehen sind, durch welche die Zugkraft bei der Montage auf die Wandschraube übertragen wird, wobei die Vorsprünge bereits ohne Ausübung der Zugkraft durch das Arretierungsteil derart mit der Wandschraube zusammenwirken, dass der Sanitärausstattungsgegenstand an der Wandschraube fixiert wird.

Vorteilhafterweise wird ein Innengewinde des Arretierungsteils mit einem Außengewinde des Hülsenteils derart verschraubt, dass bei der Montage der Sanitärausstattungsgegenstand zwischen einem am Hülsenteil angebrachten Kragen und dem Arretierungsteil unter Aufbringung der Druckkraft endgültig an der Wand fixiert wird.

Nachfolgend wird die Erfindung rein beispielhaft anhand der beigefügten Figuren beschrieben.

Es zeigen:
Fig. 1 eine perspektivische Ansicht des Hülsenteils der Erfindung;
Fig. 2 eine Seitenansicht des Hülsenteils von Fig. 1;
Fig. 3 eine perspektivische Ansicht des Arretierungsteils der erfindungsgemäßen Vorrichtung;
Fig. 4 eine Seitenansicht des Arretierungsteils von Fig. 3;
Fig. 5a, b, c und d die Vorinstallation der erfindungsgemäßen Befestigungsvorrichtung;
Fig. 6 zeigt das Aufschieben des vormontierten Sanitärausstattungsgegenstands auf die Wandschraube;
Fig. 7 zeigt das endgültige Befestigen des Sanitärausstattungsgegenstands an der Wand und
Fig. 8a, b und c zeigen die Deinstallation der erfindungsgemäßen Befestigungsvorrichtung.

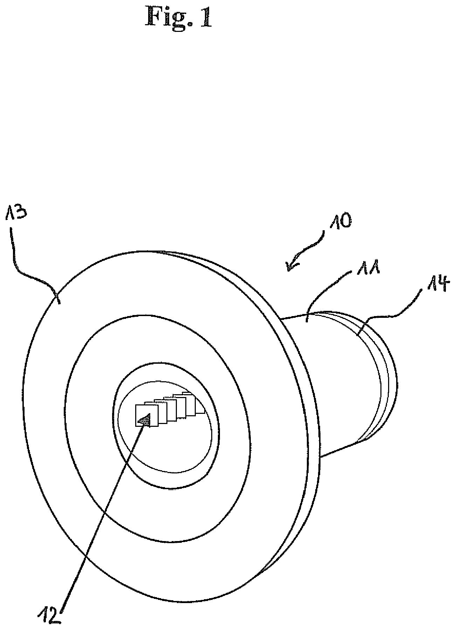

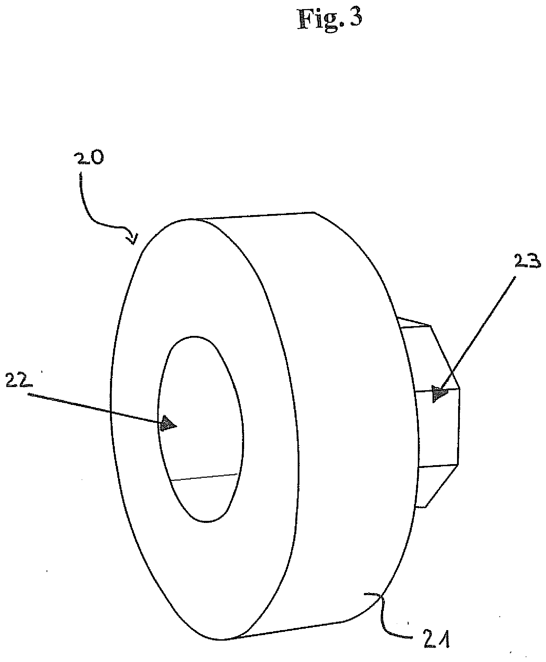

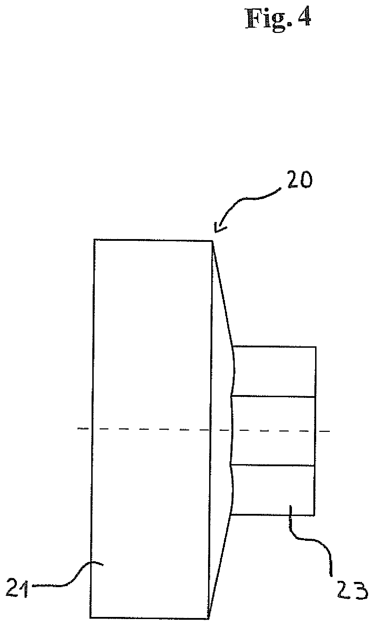

Im Weiteren wird nun das in den Figuren dargestellte Ausführungsbeispiel der Erfindung näher erläutert. So zeigt Fig. 1 ein Hülsenteil 10 in perspektivischer Ansicht, welches einen zylindrischen Grundkörper 11 aufweist, an dessen Innendurchmesser eine Vielzahl von Vorsprüngen 12 vorgesehen sind. Ferner weist das Hülsenteil 10 einen Kragen 13 auf, welcher formschlüssig an einem Sanitärausstattungsgegenstand, wie beispielsweise einem Waschbecken angebracht werden kann. An dem am Kragen 13 gegenüberliegenden Ende des Hülsenteils 10 befindet sich am zylindrischen Grundkörper 11 ein Außengewinde 14, auf welches ein in Fig. 3 und 4 dargestelltes Arretierungsteil aufgeschraubt werden kann.

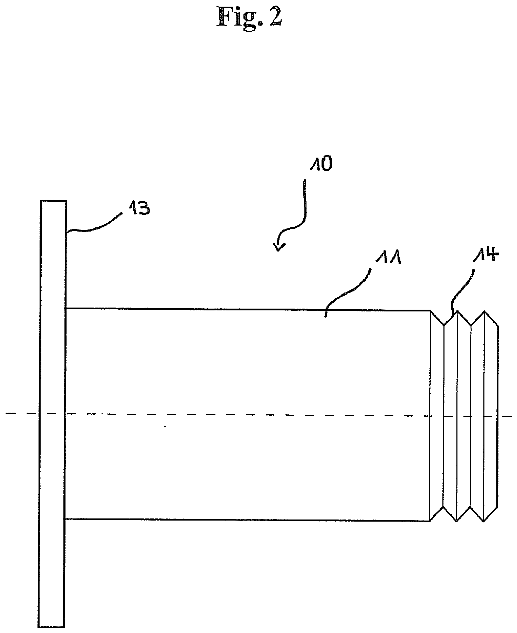

Wie in Fig. 2 gezeigt, ist das Außengewinde 14 nur an dem Endbereich des Hülsenteils 10 angebracht, welcher dem Kragen 13 gegenüberliegt.

Die Fig. 3 und 4 zeigen jeweils ein Arretierungsteil 20, welches einen zylindrischen Grundkörper 21 aufweist, wobei ein nicht dargestelltes Innengewinde 22 am Arretierungsteil 20 vorgesehen ist, um auf das Außengewinde 14 des Hülsenteils 10 aufgeschraubt werden zu können. Ferner ist ein metrischer Kopf 23 als Aufnahme für einen handelsüblichen Montageschlüssel vorgesehen, um das Hülsenteil 10 mit dem Arretierungsteil 20 in effektiver Art und Weise zu verschrauben.

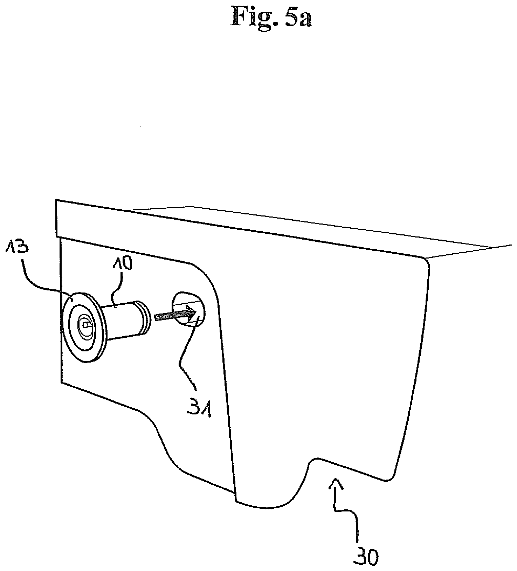

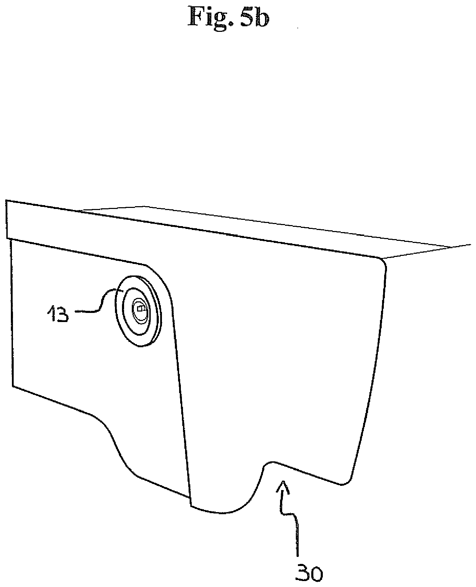

Die Fig. 5a bis 5d zeigen die Vorinstallation der erfindungsgemäßen Befestigungsvorrichtung, bevor der Sanitärausstattungsgegenstand auf die Wandschrauben aufgeschoben wird. Gemäß Fig. 5a wird das Hülsenteil 10 in eine Befestigungsöffnung 31 des Sanitärausstattungsgegenstandes 30 derart eingesetzt, dass der Kragen 13 des Hülsenteils am Sanitärausstattungsgegenstand 30 anliegt, wie in Fig. 5b gezeigt.

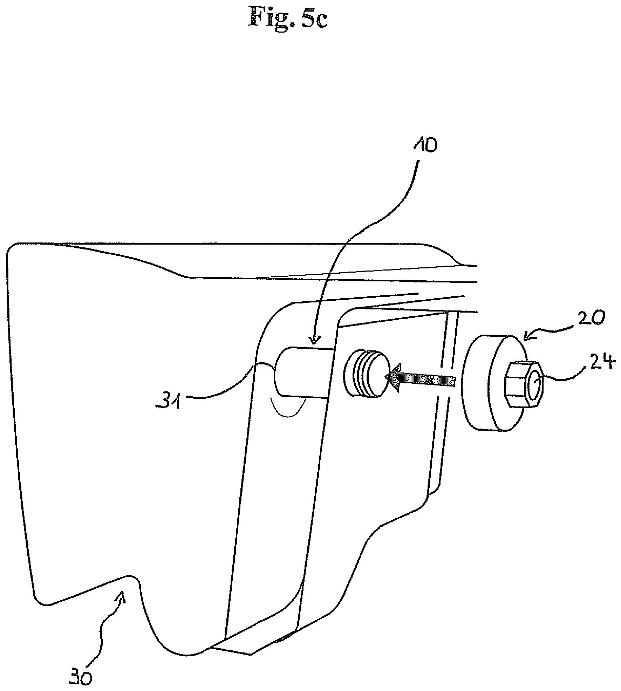

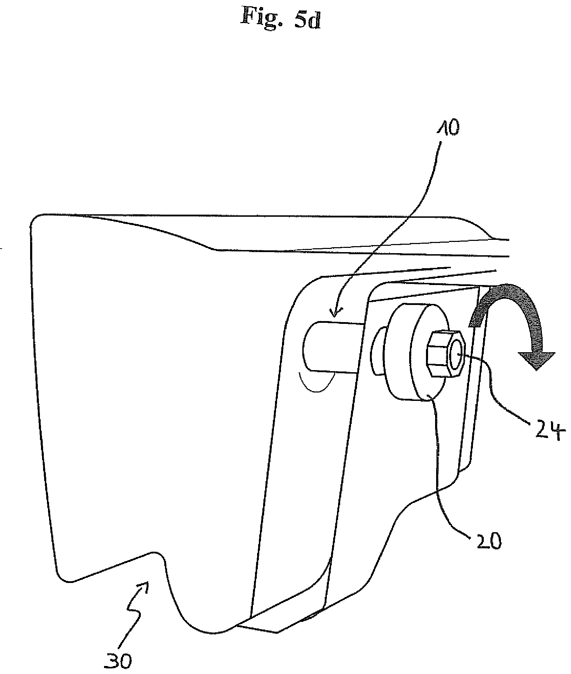

Gemäß Fig. 5c ist dargestellt, dass das Hülsenteil 10 durch die Befestigungsöffnung 31 des Sanitärausstattungsgegenstands herausragt, wobei insbesondere das Außengewinde 14 des Hülsenteils 10 aus dem Sanitärausstattungsgegenstand 30 herausragt, so dass das Arretierungsteil 20 und insbesondere das Innengewinde 22 mit dem Außengewinde 14 verschraubt werden kann, wie in Fig. 5d dargestellt ist.

Wie aus den Fig. 5c und 5d ersichtlich ist, kann das Arretierungsteil 20 eine durchgängige Innenbohrung 24 aufweisen, durch welche sich eine Wandschraube hindurch erstrecken kann.

Fig. 5d zeigt somit den Sanitärausstattungsgegenstand 30 zusammen mit dem vormontierten Hülsenteil 10 und dem daran ebenso vormontierten Arretierungsteil 20, welches in diesem vormontierten Zustand keine oder auch eine geringe Druckkraft auf den Sanitärausstattungsgegenstand ausüben kann.

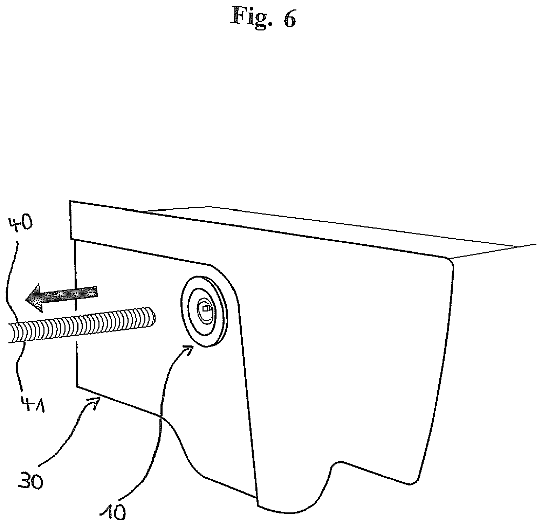

Wie in Fig. 6 gezeigt, kann der mit dem Hülsenteils 10 und dem Arretierungsteil 20 vormontierte Sanitärausstattungsgegenstand 30 gemäß dem dargestellten Pfeil auf eine Wandschraube 40 aufgeschoben werden, welche ein Außengewinde 41 aufweist. Während des Aufschiebens des Sanitärausstattungsgegenstands 30 auf die Wandschraube 40 werden die Vorsprünge 12 am Innendurchmesser des zylindrischen Grundkörpers 11 mit dem Außengewinde 41 der Wandschrauben 40 in Eingriff gebracht. Wie in Fig. 6 dargestellt, sind die Vorsprünge 12 insbesondere an zumindest einer Seite am Innendurchmesser des Hülsenteils 10 vorgesehen und sind derart ausgeführt, dass diese klauenartig lediglich ein Aufschieben ermöglichen, wobei das Material, die Form und die Größe dieser Vorsprünge derart vorbestimmt sind, dass das Hülsenteil nach dem vollständigen Aufschieben auf die Wandschraube 41 an dieser fixiert ist, so dass ein Herausziehen des Hülsenteils in entgegengesetzte Richtung nicht möglich ist.

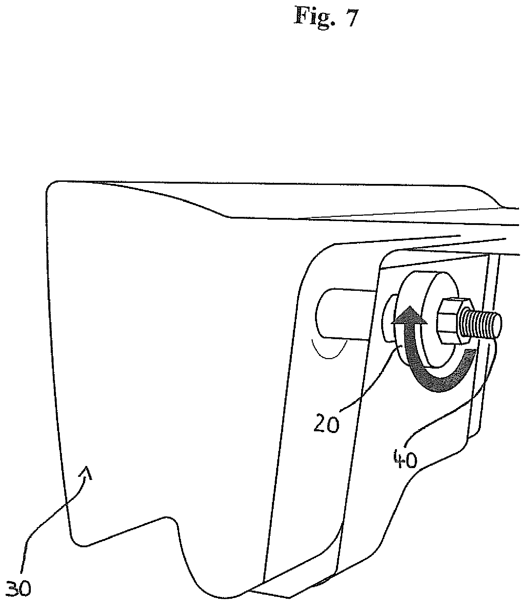

Fig. 7 zeigt nun die endgültige Montage des Sanitärausstattungsgegenstands 30, wobei lediglich einige wenige Umdrehungen, insbesondere in etwa drei Umdrehungen des Arretierungsteils 20 gemäß dem dargestellten Pfeil erforderlich sind, um den Sanitärausstattungsgegenstand 30 endgültig an der Wand zu befestigen. Dabei übt das Arretierungsteil 20 eine Zugkraft auf das Hülsenteil 10 durch die Verschraubung aus, wobei das Hülsenteil 10 diese Zugkraft mittels der Vorsprünge 12 auf die Wandschraube überträgt, und wobei das Arretierungsteil 20 zur Herstellung eines Kräftegleichgewichtes eine Druckkraft auf den Sanitärausstattungsgegenstand 30 ausübt. Wie in Fig. 7 dargestellt, ragt die Wandschraube 40 durch die Innenbohrung 24 des Arretierungsteils 20 hindurch. Dadurch ist es möglich, dass lediglich das Hülsenteil 10 und das Arretierungsteil 20 in ihrer geometrischen Ausführungsform auf den Sanitärausstattungsgegenstand 30 im Wesentlichen angepasst werden, wobei die Wandschraube 40 eine beliebige Länge aufweisen kann.

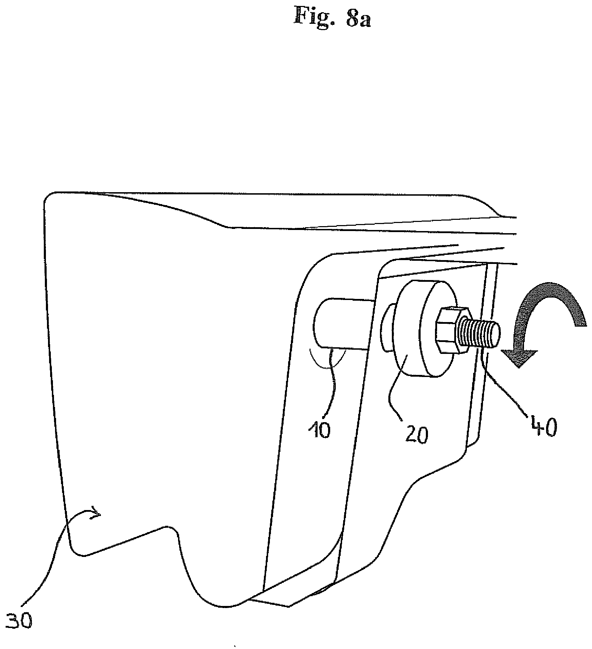

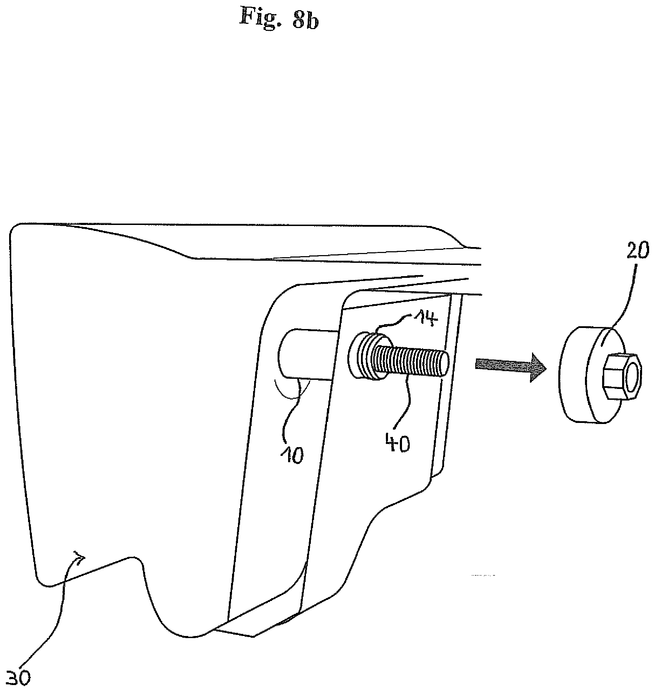

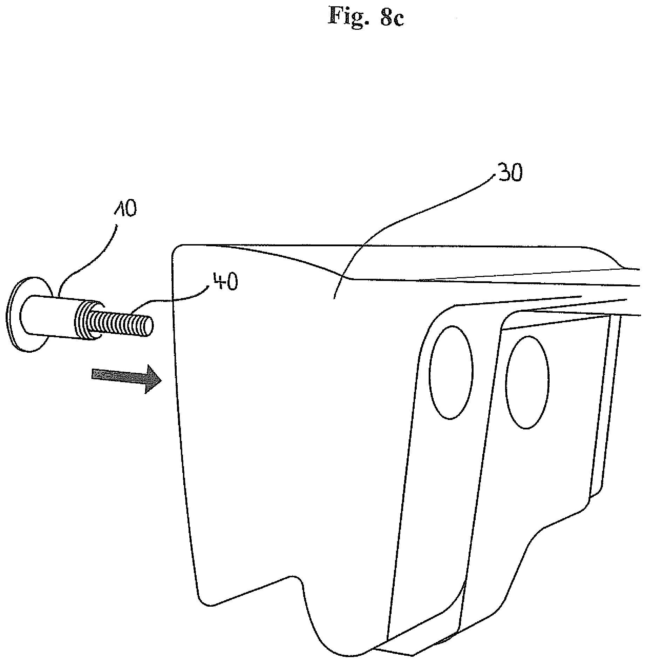

Das Hülsenteil 10 stützt sich mit seinem Kragen am Sanitärausstattungsgegenstand 30 ab. Auf der gegenüberliegenden Seite ist auf das Hülsenteil 10 das Arretierungsteil 20 aufgeschraubt, welches nach ausreichender Anzahl von Umdrehungen ebenfalls an den Sanitärausstattungsgegenstand anlegt. Bei weiterem Schrauben des Arretierungsteils 20 leitet dieses eine Zugkraft in das Hülsenteil 10 ein. Durch die im Wesentlichen feste Verbindung des Hülsenteils 10 mit der Wandschraube 40 mittels der Vorsprünge 12 wird die vom Arretierungsteil 20 bewirkte Zugkraft ebenfalls auf die Wandschraube 40 übertragen und in die Wand eingeleitet. Da sich die erfindungsgemäße Befestigungsvorrichtung im montierten Zustand in Ruhe befindet, muss ein Kräftegleichgewicht an der Befestigungsvorrichtung vorliegen. Die vom Arretierungsteil 20 bewirkte Zugkraft wirkt ebenfalls auf das Arretierungsteil selbst. Diese Zugkraft bewirkt eine Kraftbeaufschlagung des Arretierungsteils 20 in Richtung des Sanitärausstattungsgegenstandes 30, so dass das Arretierungsteil 20 eine Druckkraft auf den Sanitärausstattungsgegenstand 30 bewirkt, die den Sanitärausstattungsgegenstand 30 in einem translatorischen Freiheitsgrad an der Wand fixiert. Gemäß den Fig. 8a bis 8c ist die Deinstallation der erfindungsgemäßen Befestigungsvorrichtung dargestellt. So zeigt Fig. 8a, dass analog zur Montage nur wenige Umdrehungen des Arretierungsteils 20 erforderlich sind, um die Verschraubung zwischen dem Außengewinde 14 des Hülsenteils und dem Innengewinde 22 des Arretierungsteils zu lösen, so dass das Arretierungsteil 20 von dem Hülsenteil und der Wandschraube 40 abgezogen werden kann, wie in Fig. 8b dargestellt. Anschließend daran kann der Sanitärausstattungsgegenstand gemäß dem dargestellten Pfeil von dem Hülsenteil 10 abgezogen werden, welches aufgrund der Vorsprünge 12 an der Wandschraube 40 noch gesichert ist. Als Folge davon verbleibt das Hülsenteil 10 zwar an der Wandschraube 40 und an der Wand, um ggf. für das Aufschieben eines zweiten Sanitärausstattungsgegenstandes genutzt zu werden, welcher lediglich durch wenige Umdrehungen mit dem Arretierungsteil 20 anschließend an das Aufschieben des zweiten Sanitärausstattungsgegenstandes endgültig befestigt werden kann. Alternativ kann das an der Wandschraube 40 noch gesicherte Hülsenteil 10 von der Wandschraube 40 abgeschraubt werden, wobei die Vorsprünge 12 als ein Gewinde verwendet werden.

Für den Fachmann ist es ohne weiteres ersichtlich, dass die Vorsprünge des Hülsenteils lediglich eine bevorzugte Ausführungsform darstellen und dass das Hülsenteil im vormontierten Zustand mit der Wandschraube (auch in anderer Art und Weise) in Eingriff bringbar ist.

## Patentansprüche

1. Befestigungsvorrichtung für einen Sanitärausstattungsgegenstand (30), insbesondere Waschbecken, Waschtische, Bidets, Klosetts, Urinale, Spülkästen, WC's in Kombination mit Spülkästen und dergleichen, umfassend:
ein Hülsenteil (10), welches am Sanitärausstattungsgegenstand (30) vormontierbar und in eine Befestigungsöffnung (31) des Sanitärausstattungsgegenstands (30) einsetzbar ist und welches bei der Anbringung des Sanitärausstattungsgegenstands (30) an einer Wand im am Sanitärausstattungsgegenstand (30) vormontierten Zustand mit dem Gewinde einer aus der Wand hervorstehenden Wandschraube (40) durch Aufschieben in Eingriff bringbar ist; und
ein Arretierungsteil (20), welches derart mit dem Hülsenteil (10) zusammenwirkt, dass der Sanitärausstattungsgegenstand (30) durch eine Druckkraft, die zu einer auf die Wandschraube (40) wirkenden Zugkraft das Kräftegleichgewicht herstellt, an der Wand befestigt wird, wobei das Arretierungsteil (20) die Zugkraft auf das Hülsenteil (10) ausübt, wobei das Hülsenteil (10) bei der Montage diese Zugkraft auf die Wandschraube (40) überträgt, und wobei das Arretierungsteil (20) bei der Montage zur Herstellung des Kräftegleichgewichtes die Druckkraft auf den Sanitärausstattungsgegenstand (30) ausübt; **dadurch gekennzeichnet, dass**
das Hülsenteil (10) einen Kragen (13) aufweist, welcher im vormontierten Zustand an der der Wand zugewandten Seite des Sanitärausstattungsgegenstands (30) derart vorgesehen ist, dass der Sanitärausstattungsgegenstand (30) zusammen mit dem Hülsenteil (10) auf die Wandschraube (40) aufschiebbar ist.

2. Vorrichtung nach Anspruch 1, **dadurch gekennzeichnet, dass** das vormontierbare Hülsenteil (10) an seinem Innendurchmesser Vorsprünge (12) aufweist, welche die Zugkraft bei der Montage auf die Wandschraube (40) übertragen, wobei die Vorsprünge (12) bereits ohne Ausübung der Zugkraft durch das Arretierungsteil (20) derart mit der Wandschraube (40) zusammenwirken, dass der Sanitärausstattungsgegenstand (30) an der Wandschraube (40) fixiert ist.

3. Vorrichtung nach einem der vorhergehenden Ansprüche, **dadurch gekennzeichnet, dass** der Kragen (13) in axialer Richtung des Hülsenteils (10) eine derartige Flexibilität aufweist, dass der Kragen (13) bei der Montage durch die von der Drehbewegung des Arretierungsteils (20) bewirkten Zugkraft im Hülsenteil (10) in Richtung der Wand verformbar ist.

4. Vorrichtung nach einem der vorhergehenden Ansprüche, **dadurch gekennzeichnet, dass** das Hülsenteil (10) an dem dem Kragen (13) entgegengesetzten Ende ein Außengewinde (14) aufweist, welches mit einem Innengewinde (22) des Arretierungsteils (20) zur Aufbringung der Zugkraft in Eingriff bringbar ist.

5. Vorrichtung nach einem der vorhergehenden Ansprüche, **dadurch gekennzeichnet, dass** das Arretierungsteil (20) eine Aufnahme (23) für einen handelsüblichen Montageschlüssel aufweist, insbesondere einen metrischen Kopf.

6. Vorrichtung nach einem der vorhergehenden Ansprüche, **dadurch gekennzeichnet, dass** Vorsprünge (12) am Innendurchmesser eines zylindrischen Grundkörpers (11) des Hülsenteils mit dem Außengewinde (41) der Wandschraube (40) in Eingriff bringbar sind.

7. Verfahren zur Befestigung von Sanitärausstattungsgegenständen unter Verwendung einer Befestigungsvorrichtung gemäß einem der vorhergehenden Ansprüchen 1 bis 6, welches folgende Schritte aufweist:
Vorinstallation des Hülsenteils (10) in eine Befestigungsöffnung (31) des Sanitärausstattungsgegenstands (30) vor dem Anbringen des Sanitärausstattungsgegenstands (30) an einer Wand, wobei ein Innengewinde (22) des Arretierungsteil (20) mit einem Außengewinde (14) des Hülsenteils (10) derart verschraubt wird, dass bei der Montage der Sanitärausstattungsgegenstand (30) zwischen dem am Hülsenteil (10) angebrachten Kragen (13) und dem Arretierungsteil (20) unter Aufbringung der Druckkraft fixiert wird;
Aufschieben des Sanitärausstattungsgegenstands (30) zusammen mit dem vormontierten Hülsenteil (10) auf eine Wandschraube (40) bis zur Anlage des Sanitärausstattungsgegenstands (30) an der Wand;
Befestigen des Sanitärausstattungsgegenstands (30) an der Wand durch Aufbringung einer Zugkraft durch das Arretierungsteil (20), welches derart mit dem Hülsenteil (10) zusammenwirkt, dass der Sanitärausstattungsgegenstand (30) durch eine Druckkraft, die das Kräftegleichgewicht zu einer auf die Wandschraube (40) wirkenden Zugkraft herstellt, an der Wand befestigt wird, wobei die Zugkraft durch das Arretierungsteil (20) auf das Hülsenteil (10) ausgeübt wird, wobei diese Zugkraft durch das Hülsenteil (10) bei der Wandmontage auf die Wandschraube (40) übertragen wird und wobei die zur Herstellung des Kräftegleichgewichtes aufgebrachte Druckkraft auf den Sanitärausstattungsgegenstand (30) durch das Arretierungsteil (20) bei der Montage ausgeübt wird.

8. Verfahren nach Anspruch 7, **dadurch gekennzeichnet, dass** am Innendurchmesser des vormontierbaren Hülsenteils (10) Vorsprünge (12) vorgesehen sind, durch welche die Zugkraft bei der Montage auf die Wandschraube (40) übertragen wird, wobei die Vorsprünge (12) bereits ohne Ausübung der Zugkraft durch das Arretierungsteil (20) derart mit der Wandschraube (40) zusammenwirken, dass der Sanitärausstattungsgegenstand (30) an der Wandschraube fixiert wird.

9. Verfahren nach Anspruch 7 oder 8, **dadurch gekennzeichnet, dass** der Kragen (13) in axialer Richtung des Hülsenteils (10) eine derartige Flexibilität aufweist, dass der Kragen (13) bei der Montage durch die Zugkraft des Arretierungsteils (20) in Richtung der Wand verformt wird.

## Claims

1. A fastening device for a sanitary object (30), particularly wash basins, washstands, bidets, lavatories, urinals, flushing tanks, water closets in combination with flushing tanks and the like, comprising:
a sleeve part (10) which can be pre-assembled at the sanitary object (30) and inserted into a fastening opening (31) of the sanitary object (30), and which, when the sanitary object (30) is mounted on a wall, can be brought into engagement with the thread of a wall screw (40) projecting from the wall, in the state of pre-assembly at the sanitary object (30), by sliding the sleeve part onto the thread of the wall screw; and
a locking part (20) which cooperates with the sleeve part (10) in such a way that the sanitary object (30) is fastened on the wall by a pressing force that establishes the equilibrium of forces with respect to a traction force acting upon the wall screw (40), wherein the locking part (20) exerts the traction force on the sleeve part (10), wherein, when being assembled, the sleeve part (10) transfers this traction force to the wall screw (40), and wherein, when being assembled, the locking part (20) exerts the pressing force on the sanitary object (30) to establish the equilibrium of forces; **characterized in that**
the sleeve part (10) includes a collar (13) which, in the pre-assembled state, is provided on the side of the sanitary object (30) facing the wall in such a way that the sanitary object (30) can be slid onto the wall screw (40) together with the sleeve part (10).

2. The device according to claim 1, **characterized in that** the pre-assemblable sleeve part (10) includes projections (12) at its inner diameter, which transfer the traction force onto the wall screw (40) when being assembled, wherein the projections (12) cooperate already with the wall screw (40) when no traction force is exerted by the locking part (20) in such a way that the sanitary object (30) is fixed on the wall screw (40).

3. The device according to any of the preceding claims, **characterized in that** the collar (13) has such a flexibility in an axial direction of the sleeve part (10) that, when being assembled, the collar (13) can be deformed in the direction of the wall by the traction force in the sleeve part (10) produced by the rotational movement of the locking part (20).

4. The device according to any of the preceding claims, **characterized in that** the sleeve part (10) includes an external thread (14) at the end opposite to the collar (13), which can be brought into engagement with an internal thread (22) of the locking part (20) for applying the traction force.

5. The device according to any of the preceding claims, **characterized in that** the locking part (20) includes a holder (23) for a commercially available mounting key, particularly a metric head.

6. The device according to any of the preceding claims, **characterized in that** projections (12) at an inner diameter of a cylindrical base body (11) of the sleeve part can be brought into engagement with the external thread (41) of the wall screw (40).

7. A method for fastening sanitary objects by using a fastening device according to any of the preceding claims 1 to 6, comprising the steps of:
pre-installing the sleeve part (10) in a fastening opening (31) of the sanitary object (30) before mounting the sanitary object (30) on a wall, wherein an internal thread (22) of the locking part (20) is screwed with an external thread (14) of the sleeve part (10) in such a way that, when being assembled, the sanitary object (30) is fixed between the collar (13) mounted on the sleeve part (10) and the locking part (20) by applying the pressing force;
sliding the sanitary object (30) onto a wall screw (40) together with the pre-assembled sleeve part (10) until abutment of the sanitary object (30) against the wall;
fastening the sanitary object (30) on the wall by applying a traction force by the locking part (20) which cooperates with the sleeve part (10) in such a way that the sanitary object (30) is fastened on the wall by a pressing force which establishes the equilibrium of forces with respect to a traction force acting upon the wall screw (40), wherein the traction force is exerted on the sleeve part (10) by the locking part (20), wherein this traction force is transferred to the wall screw (40) by the sleeve part (10) on assembly to the wall, and wherein the pressing force applied in order to establish the equilibrium of forces is exerted on the sanitary object (30) by the locking part (20) on assembly.

8. The method according to claim 7, **characterized in that** projections (12) are provided at the inner diameter of the pre-assemblable sleeve part (10), by which the traction force is transferred onto the wall screw (40) on assembly, wherein the projections (12) cooperate already with the wall screw (40) when no traction force is exerted by the locking part (20) in such a way that the sanitary object (30) is fixed on the wall screw.

9. The method according to claim 7 or 8, **characterized in that** the collar (13) has such a flexibility in an axial direction of the sleeve part (10) that, when being assembled, the collar (13) is deformed in the direction of the wall by the traction force of the locking part (20).

## Revendications

1. Dispositif de fixation pour un objet d'équipement sanitaire (30), en particulier pour cuvettes, lavabos, bidets, cabinets, urinoirs, réservoirs de chasse d'eau, WC en combinaison avec réservoirs de chasse d'eau, et similaires, comprenant :
une partie de manchon (10) qui peut être prémontée à l'objet d'équipement sanitaire (30) et introduite dans une ouverture de fixation (31) de l'objet d'équipement sanitaire (30), et qui, lorsque l'objet d'équipement sanitaire (30) est monté sur un mur, peut venir en prise avec le filetage d'une vis murale (40) faisant saillie du mur, dans l'état de prémontage à l'objet d'équipement sanitaire (30), en poussant la partie de manchon sur le filetage de la vis murale ; et
une partie d'arrêt (20) qui coopère avec la partie de manchon (10) de telle manière que l'objet d'équipement sanitaire (30) soit fixé au mur par une force de pression établissant l'équilibre des forces par rapport à une force de traction agissant sur la vis murale (40), la partie d'arrêt (20) exerçant la force de traction sur la partie de manchon (10), la partie de manchon (10) transmettant cette force de traction à la vis murale (40) lors de l'assemblage, et la partie d'arrêt (20) exerçant la force de pression sur l'objet d'équipement sanitaire (30), lors de l'assemblage, afin d'établir l'équilibre des forces, **caractérisé en ce que**
la partie de manchon (10) comprend une collerette (13) qui, dans l'état prémonté, est prévue au côté de l'objet d'équipement sanitaire (30) faisant face au mur de telle manière que l'objet d'équipement sanitaire (30) puisse être poussé sur la vis murale (40) avec la partie de manchon (10).

2. Dispositif selon la revendication 1, **caractérisé en ce que** la partie de manchon (10) pouvant être prémontée comprend des saillies (12) sur son diamètre intérieur qui transmettent la force de traction à la vis murale (40) lors de l'assemblage, les saillies (12) coopérant avec la vis murale (40) même sans que la force de traction soit exercée par la partie d'arrêt (20), de telle manière que l'objet d'équipement sanitaire (30) soit fixé à la vis murale (40).

3. Dispositif selon l'une des revendications précédentes, **caractérisé en ce que** la collerette (13) présente une telle flexibilité dans la direction axiale de la partie de manchon (10) que la collerette (13) peut être déformée dans la direction du mur par la force de traction dans la partie de manchon (10) produite par le mouvement de rotation de la partie d'arrêt (20).

4. Dispositif selon l'une des revendications précédentes, **caractérisé en ce que** la partie de manchon (10) comprend un filetage mâle (14) au niveau de l'extrémité opposée à la collerette, (13), lequel peut venir en prise avec un filetage femelle (22) de la partie d'arrêt (20) afin d'appliquer la force de traction.

5. Dispositif selon l'une des revendications précédentes, **caractérisé en ce que** la partie d'arrêt (20) comprend un logement (23) pour une clé de montage usuelle, en particulier une tête métrique.

6. Dispositif selon l'une des revendications précédentes, **caractérisé en ce que** des saillies (12) situées sur le diamètre intérieur d'un corps de base (11) cylindrique de la partie de manchon peuvent venir en prise avec le filetage mâle (41) de la vis murale (40).

7. Procédé de fixation d'objets d'équipement sanitaire en utilisant un dispositif de fixation selon l'une des revendications précédentes 1 à 6, comprenant les étapes suivantes :
pré-installer la partie de manchon (10) dans une ouverture de fixation (31) de l'objet d'équipement sanitaire (30) avant de monter l'objet d'équipement sanitaire (30) sur un mur, un filetage femelle (22) de la partie d'arrêt (20) étant vissé à un filetage mâle (14) de la partie de manchon (10) de telle manière que,
lors de l'assemblage, l'objet d'équipement sanitaire (30) soit fixé entre la collerette (13) montée à la partie de manchon (10) et la partie d'arrêt (20) en appliquant la force de pression ;
pousser l'objet d'équipement sanitaire (30) sur une vis murale (40) avec la partie de manchon (10) prémontée jusqu'à ce que l'objet d'équipement sanitaire (30) vienne en butée contre le mur ;
fixer l'objet d'équipement sanitaire (30) au mur par l'application d'une force de traction par la partie d'arrêt (20) qui coopère avec la partie de manchon (10) de telle manière que l'objet d'équipement sanitaire (30) soit fixé au mur par une force de pression établissant l'équilibre des forces par rapport à une force de traction agissant sur la vis murale (40), la force de traction étant exercée sur la partie de manchon (10) par la partie d'arrêt (20), cette force de traction étant transmise à la vis murale (40) par la partie de manchon (10) lors de l'assemblage au mur, et la force de pression appliquée pour établir l'équilibre des forces étant exercée sur l'objet d'équipement sanitaire (30) par la partie d'arrêt (30) lors de l'assemblage.

8. Procédé selon la revendication 7, **caractérisé en ce que** des saillies (12) sont prévues sur le diamètre intérieur de la partie de manchon (10) pouvant être prémontée, par lesquelles la force de traction est transmise à la vis murale (40) lors de l'assemblage, les saillies (12) coopérant avec la vis murale (40) même sans que la force de traction soit exercée par la partie d'arrêt (20), de telle manière que l'objet d'équipement sanitaire (30) soit fixé à la vis murale.

9. Procédé selon la revendication 7 ou 8, **caractérisé en ce que** la collerette (13) présente une telle flexibilité dans la direction axiale de la partie de manchon (10) que la collerette (13) est déformée dans la direction du mur par la force de traction de la partie d'arrêt (20) lors de l'assemblage.
